# EUROPÄISCHE PATENTSCHRIFT

(11) **EP 3 239 952 B1**
(45) Veröffentlichungstag und Bekanntmachung des Hinweises auf die Patenterteilung: **12.07.2023**
(21) Anmeldenummer: 17168372.5
(22) Anmeldetag: 27.04.2017
(51) Int. Cl.: G08G 1/095, E01F 9/30, G08G 1/052, G08G 1/01, G06V 20/54

(54) **GESCHWINDIGKEITSANZEIGEANLAGE**
SPEED DISPLAY DEVICE
RADAR PÉDAGOGIQUE

(30) Priorität: 27.04.2016 DE 202016102230 U
(43) Veröffentlichungstag der Anmeldung: 01.11.2017
(73) Patentinhaber: Bremicker Verkehrstechnik GmbH & Co. KG, 82362 Weilheim (DE)
(72) Erfinder: Dopfer, Herbert, 82380 Peissenberg (DE)
(74) Vertreter: Baldus, Oliver

(56) Entgegenhaltungen:
- EP-A1- 0 291 607
- DE-A1-102004 035 856
- DE-A1-102008 036 313
- DE-B3-102006 002 822
- FR-A1- 2 750 522
- FR-A1- 2 978 583

## Beschreibung

Die Erfindung betrifft eine Geschwindigkeitsanzeigeanlage gemäß dem Oberbegriff von Anspruch 1.

Im Bereich Verkehr und Logistik werden heutzutage zahlreiche Geräte eingesetzt, um die jeweilige Verkehrssituation zu messen, aber auch zu beeinflussen.

Die Geschwindigkeit eines Fahrzeugs spielt eine große Rolle für die Sicherheit im Straßenverkehr und wird daher häufig gemessen.

Es bestehen seit langem Geschwindigkeitsanzeigeanlagen auf dem Markt, die neben der Straße aufgestellt werden und unter anderem die Geschwindigkeit der vorbeifahrenden Fahrzeuge erfassen.

Aus der Druckschrift EP 2 650 696 B1 ist eine derartige Vorrichtung zur Verkehrserfassung bekannt. Mit dieser Vorrichtung werden bei der Durchfahrt eines Fahrzeuges Daten zur Richtung, zur Geschwindigkeit, zur Fahrzeuglänge und zum Sicherheitsabstand zum vorausfahrenden Fahrzeug sowie zur Fahrzeugart bzw. Fahrzeugklasse durch einen schräg zur Fahrrichtung gerichteten Radarstrahl erfasst.

Des Weiteren ist aus der DE 10 2006 002822 B3 eine Anzeigevorrichtung (26) für verkehrsbezogene Informationen bekannt. Diese weist ein Tuch (32) mit Anzeigemitteln (34) auf, die in der Fläche des Tuchs (32) angeordnet sind und von einem Messgerät (22) angesteuert werden.

Ferner liegen Geschwindigkeitsanzeigeanlagen vor, die eine entsprechende Management-Software und ein GPRS-Modul aufweisen, so dass der Transfer der durch die Geschwindigkeitsanzeigeanlagen erfassenden Daten und eine Fernbedienung dieser möglich sind.

Beispielsweise bietet die Firma DataCollect eine derartige Geschwindigkeitsanzeigeanlage namens DSD an. Die dazugehörende Management-Software ist in einem Server zu installieren, aber auch als eine APP aus dem Internet herunterladbar. Dadurch kann man mithilfe eines Browsers oder eines Smartphones die aktuelle Situation vor Ort erfassen, zum Beispiel: Wie schnell wird auf dieser Straße gefahren, oder wie viele Fahrzeuge fahren auf dieser Straße. Darüber hinaus ist es möglich, durch die Software die DSD einzustellen oder die DSD über die erlaubte Höchstgeschwindigkeit der dortigen Straße zu informieren.

Allerdings besteht bei der GPRS-Kommunikation der Nachteil, dass diese stark von dem Netzbetreiber abhängig ist. An manchen Orten wie z.B. Straßen durch eine Wüste oder Bergstraßen, an denen der Bedarf an mobiler Kommunikation nicht groß ist, neigen die Netzbetreiber dazu, weniger Basisstationen oder sogar gar keine Basisstation für die Kommunikation mit Endgeräten zu installieren.

Es wäre für die Hersteller von Geschwindigkeitsanzeigeanlagen wirtschaftlich unrealistisch, selbst ein Kommunikationsnetz aufzubauen.

Folglich ist eine universell zuverlässige GPRS-Kommunikation, insbesondere für die Einstellung und/oder die Veränderung der Einstellung der aufgestellten Anlage, nicht gewährleistet. Daher müssen bei derartigen Anlagen Monteure vor Ort tätig werden, die sich technisch mit diesen Anlagen auskennen. Die Kosten für ein derartiges technisches Training der Monteure stellen ein unerwünschter Aufwand für die Hersteller dar.

Demgegenüber liegt der Erfindung die Aufgabe zugrunde, eine Geschwindigkeitsanzeigeanlage gemäß dem Oberbegriff von Anspruch 1 zu schaffen, die zumindest eine einfachere und kostengünstigere Einstellungsmöglichkeit bietet.

Diese Aufgabe wird erfindungsgemäß durch Anspruch 1 gelöst. Vorteilhafte Weiterbildungen ergeben sich aus den Unteransprüchen.

Die erfindungsgemäße Geschwindigkeitsanzeigeanlage zeichnet sich unter anderem durch eine Standort-Betriebsart aus, bei der der Standort der Geschwindigkeitsanzeigeanlage durch eine Positionierungsvorrichtung erfassbar und in einer Speichervorrichtung abspeicherbar ist.

Bevorzugt ist die Positionierungsvorrichtung ein GPS-Modul, das in an sich bekannter Weise mit einer Mehrzahl von Satelliten funktioniert. Dadurch wird der Standort der erfindungsgemäßen Geschwindigkeitsanzeigeanlage präzise erfasst. Alternativ lassen sich virtuelle, der Position entsprechende Daten im Server bereithalten. Der Server übernimmt dann die Zuordnung der Position zu den verwendeten Anlage, und bei Neueinastz die Zuordnung dieser virtueller Ortsdaten zu der neuen Anlage.

Erfindungsgemäß ist es vorgesehen, dass Parameter zur Einstellung der Geschwindigkeitsanzeigeanlage entsprechend einer Vielzahl von vorgegebenen Standorten in der Speichervorrichtung abgespeichert sind. Die vorgegebenen Standorte enthalten insbesondere die oben genannten Orte, an denen ein schwaches oder kein GPRS-Signal vorhanden ist.

Nachdem der Standort der Geschwindigkeitsanzeigeanlage erfasst wurde, werden die Parameter bei dem erfassten Standort durch eine Steuervorrichtung automatisch ausgewählt, festgelegt und der Geschwindigkeitsanzeigeanlage zugewiesen.

Dadurch ist ein GPRS-Netz für die Ferneinstellung der Anlage nicht erforderlich.

Kosten zur Einstellung durch Vor-Ort-Techniker und/oder für das Training von Vor-Ort-Technikern usw. werden auch erspart.

Ferner wird überraschend mit der Standort-Betriebsart das Management der erfindungsgemäßen Geschwindigkeitsanzeigeanlage gegenüber dem Stand der Technik verbessert. Die Einstellung erfolgt standortbezogen, nicht einheitsbezogen, so dass beim Austausch einer defekten Geschwindigkeitsanzeigeanlage die neue basierend auf den Standortdaten umgehend die Funktion des alten übernimmt.

Bei einer handelsüblichen Geschwindigkeitsanzeigeanlage, die via GPRS-Netz mit einem Server kommuniziert, wird der Standort dieser in an sich bekannter Weise durch ihre IP-Adresse identifiziert. In der Regel wird der Standort der Geschwindigkeitsanzeigeanlage zur Erleichterung der Beobachtung auf einer virtuellen Karte angezeigt.

Jedoch sind die von der IP-Adresse abgeleiteten Standorte nicht positionsgenau. Es könnte dem Server ein solcher Standort übermittelt werden, der sich z.B. ein Kilometer entfernt von dem tatsächlichen Standort der Geschwindigkeitsanzeigeanlage befindet. Bei manchen IP-Geolokalisierungsservice-Anbietern könnte auch sein, dass dem Server lediglich ein Gebiet mit einer Fläche wie z.B. 2 km2 als Standort übermittelt wird.

In einer einfachen Verkehrssituation kann derartige Ungenauigkeit des Standorts noch akzeptiert sein. Aber z.B. bei den Straßen, die nah zueinander sind und unterschiedliche Höchstgeschwindigkeitsgrenzen aufweisen, müssen die dortigen Geschwindigkeitsanzeigeanlagen je die zutreffenden erlaubten Höchstgeschwindigkeiten der Straßen darstellen.

Die Standortermittlung, die von der IP-Adresse abgeleitet wird und basierend auf der der Paramter bezüglich der Höchstgeschwindigkeit zugewiesen wird, ist daher offenbar in diesem Fall nicht geeignet.

Bevorzugt ist es vorgesehen, dass der durch das GPS-Modul erfasste Standort eine punktgenaue Präzision hat, so dass die Erfassung bzw. Überwachung der Vor-Ort-Verkehrssituation und die Fernbedienung der Geschwindigkeitsanzeigeanlage verbessert werden.

In einer bevorzugten Ausführungsform weist die Geschwindigkeitsanzeigeanlage eine Mehrzahl von Modi auf. Mindestens einer der Modi ist nach der Erfassung des Standorts automatisch durch die Steuervorrichtung oder durch eine Fernbedienung der Steuervorrichtung auszuwählen.

Beispielsweise wird ein Verkehrszeichen-Modus unter der Standort-Betriebsart, also nach der Erfassung des Standorts, automatisch durch die Steuervorrichtung ausgewählt, in welchem Modus vorgegebene Verkehrszeichen entsprechend dem erfassten Standort auf einer Anzeigevorrichtung dargestellt sind.

In einer weiteren bevorzugten Ausführungsform kann die Geschwindigkeitsanzeigeanlage entweder verkabelt, oder kabellos mit einem Server verbunden werden. Bevorzugt ist dazu ein GPRS/UMTS/LTE-Modul vorgesehen.

In einer weiteren bevorzugten Ausführungsform ist es vorgesehen, dass zwischen einem Server und den Geschwindigkeitsanzeigeanlagen bidirektional kommuniziert wird. Die in der Speichervorrichtung abgespeicherten Daten sind mit dem Server austauschbar und/oder beim Server abspeicherbar und/oder verarbeitbar und/oder via das mit dem Server verbundene Internet im Zugriff, wobei der Server gleichzeitig mit einer Vielzahl von erfindungsgemäßen Geschwindigkeitsanzeigeanlagen kommunizieren kann.

In einer weiteren bevorzugten Ausführungsform ist es vorgesehen, dass unter der Standort-Betriebsart die (aktuellen) Parameter zur Einstellung der Geschwindigkeitsanzeigeanlage automatisch oder manuell durch den Server zuweisbar sind.

In einer weiteren bevorzugten Ausführungsform ist es vorgesehen, dass die Geschwindigkeitsanzeigeanlage einen Temperatursensor aufweist, der die Temperatur an der Geschwindigkeitsanzeigeanlage erfasst und in der Speichervorrichtung abspeichert. Falls die erfasste Temperatur niedriger als eine in der Speichervorrichtung abgespeicherte vorgegebene Temperatur ist, wird ein Glättewarn-Modus durch die Steuervorrichtung ausgewählt, in welchem Modus ein Warnhinweis auf die Glätte von Straßen auf der Anzeigevorrichtung angezeigt ist.

In einer weiteren bevorzugten Ausführungsform ist es vorgesehen, dass die Geschwindigkeitsanzeigeanlage mindestens eine Kamera aufweist, welche Bilder über die Umgebung der Geschwindigkeitsanzeigeanlage, insbesondere über die Verkehrslage und/oder das Wetter an der Geschwindigkeitsanzeigeanlage, generiert. Diese Bilder sind ebenfalls in der Speichervorrichtung abspeicherbar.

Überraschend wird die Präzision des erfassten Standorts durch die Kamera weiter erhöht. Bei z.B. zweispurigen Straßen kann die Genauigkeit des GPS zu gering sein, so dass der Benutzer nicht weiß, ob die Geschwindigkeitsanzeigeanlage an der linken oder rechten Straßenseite steht. Mit der Kamera ist dieses Problem erfindungsgemäß ohne weiteres erledigt.

In einer weiteren bevorzugten Ausführungsform ist es vorgesehen, dass die Geschwindigkeitsanzeigeanlage eine Kompasseinheit aufweist, durch welche die Aufstellrichtung der Geschwindigkeitsanzeigeanlage ermittelbar ist. Die Aufstellrichtung ist ebenfalls in der Speichervorrichtung abspeicherbar.

Mit der erfassten Aufstellrichtung der Geschwindigkeitsanzeigeanlage wird die Präzision des erfassten Standorts weiter erhöht. Bei einer zweispurigen Straße erkennt der Benutzer mithilfe der Aufstellrichtung dann ersichtlich, ob die Geschwindigkeitsanzeigeanlage an der linken oder rechten Straßenseite steht.

In einer weiteren bevorzugten Ausführungsform ist es vorgesehen, dass die Geschwindigkeitsanzeigeanlage einen Helligkeitssensor aufweist, durch welchen die Helligkeit der Umgebung erfasst werden kann. Anschließend wird die Helligkeit der Anzeige auf der Anzeigevorrichtung durch die Steuervorrichtung automatisch entsprechend angemessen eingestellt.

In einer weiteren bevorzugten Ausführungsform ist es vorgesehen, dass die Geschwindigkeitsanzeigeanlage einen Geschwindigkeitsanzeige-Modus aufweist, in dem die erfasste Geschwindigkeit auf der Anzeigevorrichtung dargestellt ist.

In einer weiteren bevorzugten Ausführungsform ist es vorgesehen, dass die Geschwindigkeitsanzeigeanlage einen Smiley-Modus aufweist, in dem mindestens ein Zeichen entsprechend einem Vergleichsergebnis zwischen der erfassten Geschwindigkeit und einer in der Speichervorrichtung abgespeicherten vorgegebenen Geschwindigkeit auf der Anzeigevorrichtung dargestellt ist. Die in der Speichervorrichtung abgespeicherten vorgegebenen Geschwindigkeit wird bevorzugt als einer der Parameter durch den Server zugewiesen, und bevorzugt ist ferner die erfasste Geschwindigkeit auf der Anzeigevorrichtung dargestellt.

In einer weiteren bevorzugten Ausführungsform ist es vorgesehen, dass die Geschwindigkeitsanzeigeanlage einen Text-Modus aufweist, in dem Texte entsprechend einem Vergleichsergebnis zwischen der erfassten Geschwindigkeit und einer in der Speichervorrichtung abgespeicherten vorgegebenen Geschwindigkeit auf der Anzeigevorrichtung dargestellt sind. Die in der Speichervorrichtung abgespeicherte vorgegebene Geschwindigkeit wird bevorzugt als einer der Parameter durch den Server zugewiesen, und bevorzugt ist ferner die erfasste Geschwindigkeit auf der Anzeigevorrichtung dargestellt.

In einer weiteren bevorzugten Ausführungsform ist es vorgesehen, dass die Geschwindigkeitsanzeigeanlage einen Info-Modus aufweist, in dem vorgegebene Texte auf der Anzeigevorrichtung dargestellt sind.

Die erfindungsgemäße Geschwindigkeitsanzeigeanlage wird entweder durch Netzkabel mit Strom und/oder durch Akkus versorgt. Das Netzkabel ist bevorzugt an eine Straßenlaterne angeschlossen und/oder die Akkus werden bevorzugt durch eine Straßenlaterne aufgeladen.

Weitere Vorteile, Einzelheiten und Merkmale ergeben sich aus der nachstehenden Beschreibung eines Ausführungsbeispiels der Erfindung anhand der Zeichnungen.

Es zeigen:
Fig. 1 eine mit einem Blockdiagramm schematisch dargestellte Ausführungsform der erfindungsgemäßen Geschwindigkeitsanzeigeanlage;
Fig. 2 ein schematisch dargestelltes Kommunikationsszenario der erfindungsgemäßen Geschwindigkeitsanzeigeanlage mit Satelliten, einem Server und einem Endgerät; Fig. 3a ein Beispiel der Anzeige auf der Anzeigevorrichtung im Geschwindigkeits-Modus;
Fig. 3b ein Beispiel der Anzeige auf der Anzeigevorrichtung im Smiley-Modus;
Fig. 3c ein Beispiel der Anzeige auf der Anzeigevorrichtung im Text-Modus;
Fig. 3d ein Beispiel der Anzeige auf der Anzeigevorrichtung im Glättewarn-Modus;
Fig. 3e ein Beispiel der Anzeige auf der Anzeigevorrichtung im Verkehrszeichen-Modus; und
Fig. 3f ein Beispiel der Anzeige auf der Anzeigevorrichtung im Info-Modus.

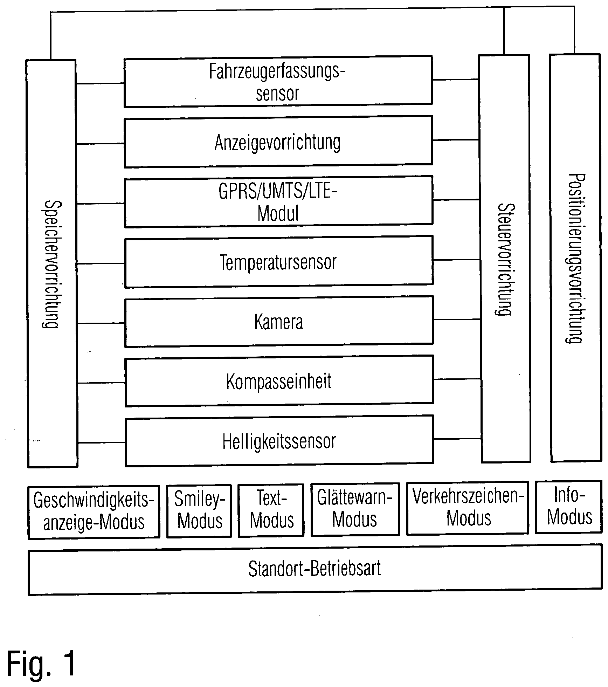

Die in Fig. 1 mit einem Blockdiagramm dargestellte Ausführungsform der erfindungsgemäßen Geschwindigkeitsanzeigeanlage 100 weist eine Speichervorrichtung, eine Steuervorrichtung, eine Positionierungsvorrichtung, einen Fahrzeugerfassungssensor, eine Anzeigevorrichtung 8, ein GPRS/UMTS/LTE-Modul, einen Temperatursensor, eine Kamera, eine Kompasseinheit sowie einen Helligkeitssensor auf. Ferner weist diese Ausführungsform eine Standort-Betriebsart und sechs Modi auf, nämlich den Geschwindigkeits-Modus, den Smiley-Modus, den Text-Modus, den Glättewarn-Modus, den Verkehrszeichen-Modus und den Info-Modus.

Aus Fig. 1 ist es ersichtlich, dass der Fahrzeugerfassungssensor, die Anzeigevorrichtung 8, das GPRS/UMTS/LTE-Modul, der Temperatursensor, die Kamera, die Kompasseinheit und der Helligkeitssensor sowie die Positionierungsvorrichtung für Datenaustausch mit der Speichervorrichtung und der Steuervorrichtung ausgelegt sind.

Die Positionierungsvorrichtung weist ein GPS-Modul auf, mit dem der Standort der Geschwindigkeitsanzeigeanlage 100 in der Standort-Betriebsart erfasst und in der Speichervorrichtung abgespeichert wird.

Das GPS-Modul kann in allen Modi der Geschwindigkeitsanzeigeanlage 100 aktiv sein.

Wie vorstehend bereits ausführlich erläutert wurde, werden, nachdem der Standort der Geschwindigkeitsanzeigeanlage erfasst wurde, die Parameter bei dem erfassten Standort zur Einstellung der Geschwindigkeitsanzeigeanlage, welche Parameter bereits vorab in der Speichervorrichtung abgespeichert wurden, durch eine Steuervorrichtung automatisch ausgewählt und der Geschwindigkeitsanzeigeanlage zugewiesen.

Diese durch das GPS-Modul automatische Zuweisung der Parameter ist besonders günstig an den Orten, an denen lediglich ein schwaches oder kein GPRS/UMTS/LTE-Signal vorhanden ist, so dass bisher Techniker zur Einstellung der Geschwindigkeitsanzeigeanlage vor Ort abgesandt werden mussten.

Des Weiteren ist es erfindungsgemäß vorgesehen, dass der durch das GPS-Modul erfasste Standort, wie oben bereits beschrieben, eine deutlich höhere Präzision gegenüber demjenigen bei der IP-Adresse-Lösung aufweist, so dass die Erfassung bzw. Überwachung der Vor-Ort-Verkehrssituation und die Fernbedienung der Geschwindigkeitsanzeigeanlage verbessert werden.

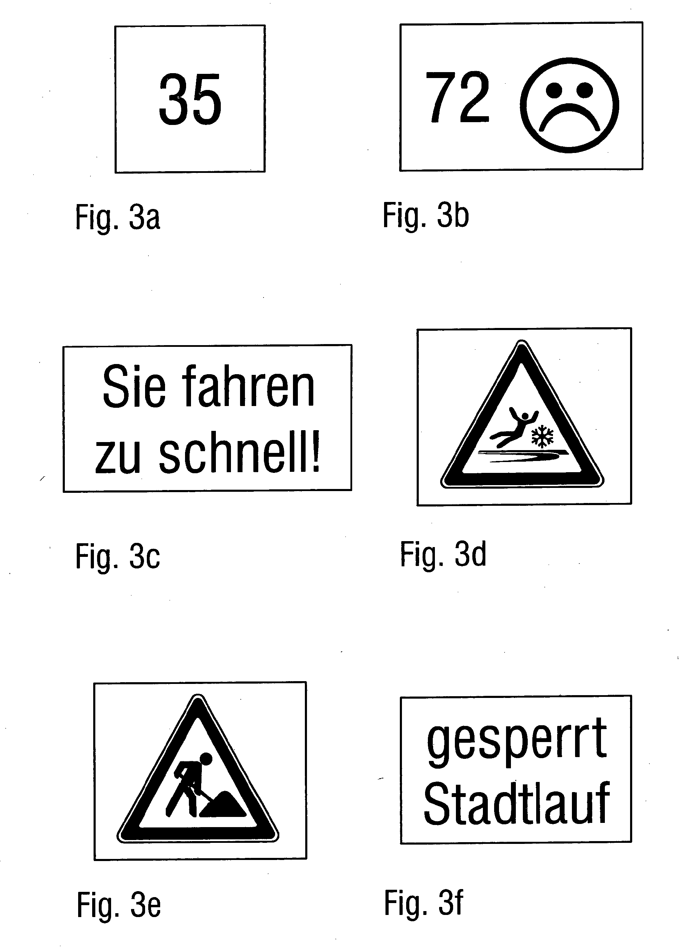

Einer der sechs dargestellten Modi wird nach der Erfassung des Standorts durch die Steuervorrichtung ausgewählt. In dem vorliegenden Ausführungsbeispiel wird der Info-Modi gemäß Fig. 3f ausgewählt. Also werden die entsprechenden Informationen "gesperrt Stadtlauf" auf der Anzeigevorrichtung 8 angezeigt, so dass jedes auf der Straße fahrende

Fahrzeug darüber informiert wird, dass die Straßen voraus wegen eines Stadtlaufs gesperrt sind.

Mit dem erfindungsgemäßen Fahrzeugerfassungssensor wird die Geschwindigkeit eines zu der Geschwindigkeitsanzeigeanlage hin fahrenden Fahrzeugs erfasst. In dem Geschwindigkeitsanzeige-Modus wird die erfasste Geschwindigkeit von z.B. 35 km/h gemäß Fig. 3a auf der Anzeigevorrichtung 8 angezeigt.

Mit dem erfindungsgemäßen Temperatursensor wird die Temperatur an der Geschwindigkeitsanzeigeanlage erfasst. Falls die erfasste Temperatur niedriger als eine in der Speichervorrichtung abgespeicherte vorgegebene Temperatur ist, wird ein Glättewarn-Modus durch die Steuervorrichtung ausgewählt. In diesem Modus ist ein Warnbildzeichen gemäß Fig. 3d zum Hinweis auf die Straßenglätte auf der Anzeigevorrichtung 8 dargestellt.

Mit der erfindungsgemäßen Kamera werden Bilder über die Umgebung der Geschwindigkeitsanzeigeanlage, insbesondere über die Verkehrslage und/oder das Wetter an der Geschwindigkeitsanzeigeanlage, generiert.

Überraschend wird die Präzision des erfassten Standorts durch die Kamera weiter erhöht. Bei z.B. zweispurigen Straßen kann die Genauigkeit des GPS zu gering sein, so dass der Benutzer nicht weiß, ob die Geschwindigkeitsanzeigeanlage an der linken oder rechten Straßenseite steht. Mit der Kamera ist dieses Problem erfindungsgemäß ohne weiteres erledigt.

Mit der erfindungsgemäßen Kompasseinheit wird die Aufstellrichtung der Geschwindigkeitsanzeigeanlage ermittelt, mithilfe welcher Aufstellrichtung erfindungsgemäß die Präzision des erfassten Standorts weiter erhöht wird. Bei einer zweispurigen Straße erkennt der Benutzer damit ersichtlich, ob die Geschwindigkeitsanzeigeanlage an der linken oder rechten Straßenseite steht.

Mit dem erfindungsgemäßen Helligkeitssensor wird die Helligkeit der Umgebung erfasst. Basierend hierauf wird die Helligkeit der Anzeige auf der Anzeigevorrichtung 8 durch die Steuervorrichtung automatisch entsprechend angemessen eingestellt.

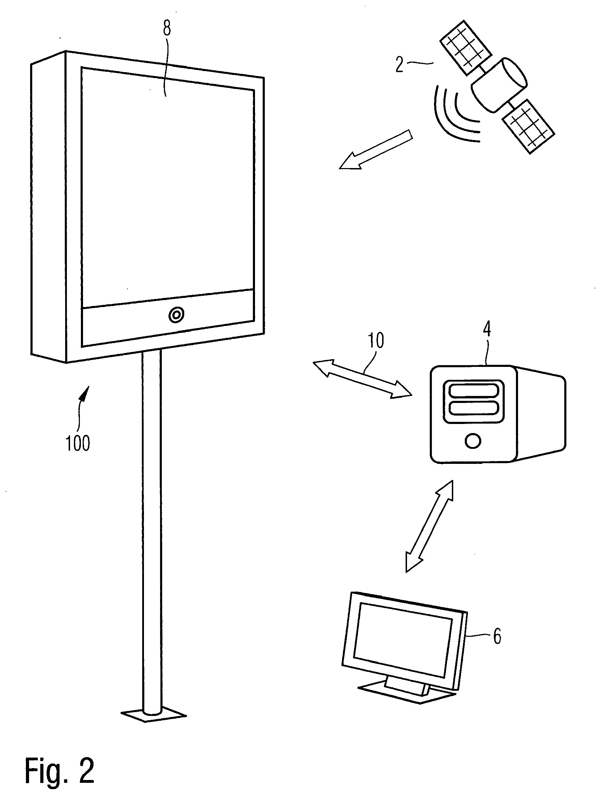

Die erfindungsgemäße Geschwindigkeitsanzeigeanlage 100 kann mit einer Mehrzahl von Satelliten 2 (lediglich eine Satellit ist zur Veranschaulichung in Fig. 2 dargestellt), mit einem Server 4 und über den Server 4 mit einem Endgerät 6 kommunizieren. Die Kommunikation zwischen dem Server 4 und der erfindungsgemäßen Geschwindigkeitsanzeigeanlage 100 wird in dem dargestellten Ausführungsbeispiel durch ein GPRS/UMTS/LTE-Netz 10 realisiert.

Die Auswahl der Modi ist erfindungsgemäß durch eine Fernbedienung bei dem Server 4 und/oder bei dem Endgerät 6 vorzunehmen.

Erfindungsgemäß ist es vorgesehen, dass die in der Speichervorrichtung abgespeicherten Daten mit einem Server 4 austauschbar und/oder beim Server 4 abspeicherbar und/oder verarbeitbar und/oder durch das Endgerät 6 im Zugriff sind.

Die aktuellen Parameter zur Einstellung der Geschwindigkeitsanzeigeanlage 100 werden ferner erfindungsgemäß automatisch oder manuell durch den Server zugewiesen.

Beispielsweise sind in dem Smiley-Modus gemäß Fig. 3b eine erfasste Fahrgeschwindigkeit von 72 km/h und ein trauriges Gesicht nebeneinander auf der Anzeigevorrichtung 8 angezeigt. Das traurige Gesicht deutet darauf hin, dass die Fahrgeschwindigkeit von 72 km/h die erlaubte Höchstgeschwindigkeit der Straße überschreitet. Die erlaubte Höchstgeschwindigkeit wird bevorzugt als einer der Parameter durch den Server zugewiesen.

Ferner ist beispielsweise im Text-Modus gemäß Fig. 3c der Satz - "Sie fahren zu schnell!" - auf der Anzeigevorrichtung 8 angezeigt. Der Satz deutet darauf hin, dass die erfasste Fahrgeschwindigkeit die erlaubte Höchstgeschwindigkeit der Straße überschreitet. Die erlaubte Höchstgeschwindigkeit wird bevorzugt als einer der Parameter durch den Server zugewiesen.

Im Verkehrszeichen-Modus gemäß Fig. 3e ist ein Verkehrszeichen - Baustelle - auf der Anzeigevorrichtung 8 dargestellt, welches Zeichen bedeutet, dass eine Baustelle im weiteren Straßenverlauf vorliegt.

## Patentansprüche

1. Geschwindigkeitsanzeigeanlage, mit einem Fahrzeugerfassungssensor und einer Anzeigevorrichtung (8), auf welcher mindestens die Geschwindigkeit eines von dem Fahrzeugerfassungssensor erfassten Fahrzeug darstellbar ist, und mit einer Steuervorrichtung, die wiederkehrend den Fahrzeugerfassungssensor zur Erfassung der Geschwindigkeit eines Fahrzeugs ansteuert und die Anzeigevorrichtung (8) steuert, **dadurch gekennzeichnet, dass** die Steuervorrichtung eine Standort-Betriebsart aufweist, bei der der Standort der Geschwindigkeitsanzeigeanlage (100) durch eine Positionierungsvorrichtung, insbesondere durch ein GPS-Modul erfassbar, abspeicherbar ist, wobei die Geschwindigkeitsanzeigeanlage (100) eine Speichervorrichtung aufweist, in der der Standort der Geschwindigkeitsanzeigeanlage abspeicherbar ist, wobei Parameter zur Einstellung der Geschwindigkeitsanzeigeanlage (100) entsprechend einer Vielzahl von vorgegebenen Standorten in der Speichervorrichtung abgespeichert sind und die Parameter bei dem erfassten Standort, der einer der vorgegebenen abgespeicherten Standorte ist, automatisch durch die Steuervorrichtung zugewiesen werden

2. Geschwindigkeitsanzeigeanlage nach Anspruch 1, **dadurch gekennzeichnet, dass** die Geschwindigkeitsanzeigeanlage (100) eine Mehrzahl von Modi aufweist, insbesondere auch einen Geschwindigkeitsanzeige-Modus aufweist, in dem die erfasste Geschwindigkeit auf der Anzeigevorrichtung (8) dargestellt ist.

3. Geschwindigkeitsanzeigeanlage nach Anspruch 2, **dadurch gekennzeichnet, dass** mindestens einer der Modi nach der Erfassung des Standorts automatisch durch die Steuervorrichtung oder durch eine Fernbedienung der Steuervorrichtung auswählbar ist.

4. Geschwindigkeitsanzeigeanlage nach einem der vorhergehenden Ansprüche, **dadurch gekennzeichnet, dass** die Geschwindigkeitsanzeigeanlage (100) verkabelt oder kabellos, insbesondere via ein GPRS/UMTS/LTE-Modul, mit einem Server (4) verbindbar ist.

5. Geschwindigkeitsanzeigeanlage nach einem der vorhergehenden Ansprüche, **dadurch gekennzeichnet, dass** eine bidirektionale Kommunikation mit dem Server realisiert ist und die in der Speichervorrichtung abgespeicherten Daten mit dem Server (4) austauschbar und/oder beim Server (4) abspeicherbar und/oder verarbeitbar und/oder via das mit dem Server (4) verbundene Internet im Zugriff sind.

6. Geschwindigkeitsanzeigeanlage nach einem der vorhergehenden Ansprüche, **dadurch gekennzeichnet, dass** die Geschwindigkeitsanzeigeanlage fernsteuerbar ist und die Parameter zur Einstellung der Geschwindigkeitsanzeigeanlage (100) durch den Server (4) zuweisbar sind und/oder ein Moduswechsel durch den Server erzeugbar ist.

7. Geschwindigkeitsanzeigeanlage nach einem der vorhergehenden Ansprüche, **dadurch gekennzeichnet, dass** die Geschwindigkeitsanzeigeanlage (100) einen Temperatursensor aufweist, der die Temperatur an der Geschwindigkeitsanzeigeanlage (100) erfasst und in der Speichervorrichtung abspeichert, wobei insbesondere bei einer erfassten Temperatur, die niedriger als eine in der Speichervorrichtung abgespeicherte vorgegebene Temperatur ist, ein Glättewarn-Modus durch die Steuervorrichtung auswählbar ist, in welchem Modus ein Warnhinweis auf die Glätte von Straßen auf der Anzeigevorrichtung (8) darstellbar ist.

8. Geschwindigkeitsanzeigeanlage nach einem der vorhergehenden Ansprüche, **dadurch gekennzeichnet, dass** die Geschwindigkeitsanzeigeanlage (100) mindestens eine Kamera, insbesondere ein Raspberry-Pi-Kamera-Modul aufweist, die Bilder über die Umgebung der Geschwindigkeitsanzeigeanlage (100), insbesondere über die Verkehrslage und/oder das Wetter an der Geschwindigkeitsanzeigeanlage (100), generiert, wobei die Bilder in der Speichervorrichtung abspeicherbar sind.

9. Geschwindigkeitsanzeigeanlage nach einem der vorhergehenden Ansprüche, **dadurch gekennzeichnet, dass** die Geschwindigkeitsanzeigeanlage (100) eine Kompasseinheit aufweist, durch welche die Aufstellrichtung der Geschwindigkeitsanzeigeanlage (100) ermittelbar ist, wobei die Aufstellrichtung in der Speichervorrichtung abspeicherbar ist.

10. Geschwindigkeitsanzeigeanlage nach einem der vorhergehenden Ansprüche, **dadurch gekennzeichnet, dass** die Geschwindigkeitsanzeigeanlage (100) einen Helligkeitssensor aufweist, durch welchen die Helligkeit von Anzeigen auf der Anzeigevorrichtung (8) einstellbar ist.

11. Geschwindigkeitsanzeigeanlage nach einem der vorhergehenden Ansprüche, **dadurch gekennzeichnet, dass** die Geschwindigkeitsanzeigeanlage (100) einen Smiley-Modus aufweist, in dem mindestens ein Zeichen entsprechend einem Vergleichsergebnis zwischen der erfassten Geschwindigkeit und einer in der Speichervorrichtung abgespeicherten vorgegebenen Geschwindigkeit, die insbesondere als einer der Parameter durch den Server (4) zugewiesen wird, auf der Anzeigevorrichtung (8) dargestellt ist, wobei insbesondere ferner die erfasste Geschwindigkeit auf der Anzeigevorrichtung (8) dargestellt ist.

12. Geschwindigkeitsanzeigeanlage nach einem der vorhergehenden Ansprüche, **dadurch gekennzeichnet, dass** die Geschwindigkeitsanzeigeanlage (100) einen Text-Modus aufweist, in dem Texte entsprechend einem Vergleichsergebnis zwischen der erfassten Geschwindigkeit und einer in der Speichervorrichtung abgespeicherten vorgegebenen Geschwindigkeit, die insbesondere als einer der Parameter durch den Server (4) zugewiesen wird, auf der Anzeigevorrichtung (8) dargestellt sind, wobei insbesondere ferner die erfasste Geschwindigkeit auf der Anzeigevorrichtung (8) dargestellt ist und/oder die Geschwindigkeitsanzeigeanlage (100) einen Info-Modus aufweist, in dem vorgegebene Texte auf der Anzeigevorrichtung (8) dargestellt sind.

13. Geschwindigkeitsanzeigeanlage nach einem der vorhergehenden Ansprüche, **dadurch gekennzeichnet, dass** die Geschwindigkeitsanzeigeanlage (100) einen Verkehrszeichen-Modus aufweist, in dem vorgegebene Verkehrszeichen auf der Anzeigevorrichtung (8) dargestellt sind.

## Claims

1. A speed display system, having a vehicle detection sensor and a display device (8) on which at least the speed of a vehicle detected by the vehicle detection sensor can be displayed, and having a control device that recurrently controls the vehicle detection sensor for detecting the speed of a vehicle and controls the display device (8), **characterized in that** the control device has a location operating mode in which the location of the speed display system (100) can be stored by a positioning device, in particular detectable by a GPS module, wherein the speed display system (100) has a storage device in which the location of the speed display system can be stored, wherein parameters for setting the speed display system (100) corresponding to a plurality of predetermined locations are stored in the storage device, and the parameters at the detected location which is one of the predetermined stored locations are automatically assigned by the control device.

2. The speed display system according to claim 1, **characterized in that** the speed display system (100) has a plurality of modes, in particular also a speed display mode in which the detected speed is displayed on the display device (8) .

3. The speed display system according to claim 2, **characterized in that** at least one of the modes is automatically selectable by the control device or by a remote control of the control device after detection of the location.

4. The speed display system according to any one of the preceding claims, **characterized in that** the speed display system (100) is connectable to a server (4) wired or wireless, in particular via a GPRS/UMTS/LTE module.

5. The speed display system according to any one of the preceding claims, **characterized in that** a bidirectional communication with the server is realized and the data stored in the storage device can be exchanged with the server (4) and/or can be stored and/or processed at the server (4) and/or can be accessed via the Internet connected to the server (4).

6. The speed display system according to any one of the preceding claims, **characterized in that** the speed display system is remotely controllable and the parameters for setting the speed display system (100) can be assigned by the server (4) and/or a mode change can be generated by the server.

7. The speed display system according to any one of the preceding claims, **characterized in that** the speed display system (100) comprises a temperature sensor which detects the temperature at the speed display system (100) and stores it in the storage device, wherein in particular in the case of a detected temperature which is lower than a predetermined temperature stored in the storage device, a slippery road warning mode can be selected by the control device, in which mode a warning indication of the slipperiness of roads can be displayed on the display device (8).

8. The speed display system according to any one of the preceding claims, **characterized in that** the speed display system (100) comprises at least one camera, in particular a Raspberry Pi camera module, which generates images of the environment of the speed display system (100), in particular of the traffic situation and/or the weather at the speed display system (100), wherein the images can be stored in the storage device.

9. The speed display system according to any one of the preceding claims, **characterized in that** the speed display system (100) comprises a compass unit by means of which the set-up direction of the speed display system (100) can be determined, wherein the set-up direction can be stored in the storage device.

10. The speed display system according to any one of the preceding claims, **characterized in that** the speed display system (100) comprises a brightness sensor by means of which the brightness of displays on the display device (8) can be adjusted.

11. The speed display system according to any one of the preceding claims, **characterized in that** the speed display system (100) comprises a smiley mode in which at least one sign corresponding to a comparison result between the detected speed and a predetermined speed stored in the storage device, which is assigned in particular as one of the parameters by the server (4), is displayed on the display device (8), wherein in particular furthermore the detected speed is displayed on the display device (8).

12. The speed display system according to any one of the preceding claims, **characterized in that** the speed display system (100) comprises a text mode in which texts corresponding to a comparison result between the detected speed and a predetermined speed stored in the storage device, which is assigned in particular as one of the parameters by the server (4), are displayed on the display device (8), wherein in particular furthermore the detected speed is displayed on the display device (8) and/or the speed display system (100) has an info mode in which predetermined texts are displayed on the display device (8).

13. The speed display system according to any one of the preceding claims, **characterized in that** the speed display system (100) comprises a traffic sign mode in which predetermined traffic signs are displayed on the display device (8).

## Revendications

1. Dispositif d'affichage de vitesse, avec un capteur de détection de véhicules et un dispositif d'affichage (8) sur lequel au moins la vitesse d'un véhicule détecté par le capteur de détection de véhicules peut être représentée, et avec un dispositif de commande qui commande de manière répétée le capteur de détection de véhicules pour détecter la vitesse d'un véhicule et qui commande le dispositif d'affichage (8), **caractérisée en ce que** le dispositif de commande présente un mode de fonctionnement par emplacement dans lequel l'emplacement du dispositif d'affichage de vitesse (100) est déterminé par un dispositif de positionnement, en particulier détectable par un module GPS, où l'installation d'affichage de vitesse (100) présente un dispositif de mémorisation dans lequel l'emplacement du dispositif d'affichage de vitesse peut être mémorisé, où des paramètres de réglage de l'installation d'affichage de vitesse (100) sont mémorisés dans le dispositif de mémorisation en fonction d'une pluralité d'emplacements prédéfinis et les paramètres sont automatiquement attribués par le dispositif de commande à l'emplacement détecté qui est l'un des emplacements mémorisés prédéfinis.

2. Dispositif d'affichage de vitesse selon la revendication 1, **caractérisé en ce que** le dispositif d'affichage de vitesse (100) présente une pluralité de modes, en particulier présente également un mode d'affichage de vitesse dans lequel la vitesse détectée est représentée sur le dispositif d'affichage (8) .

3. Dispositif d'affichage de vitesse selon la revendication 2, **caractérisé en ce qu'**au moins l'un des modes peut être sélectionné automatiquement par le dispositif de commande ou par une télécommande du dispositif de commande après la détection de la localisation.

4. Dispositif d'affichage de vitesse l'une des revendications précédentes, **caractérisé en ce que** l'indicateur de vitesse (100) peut être relié à un serveur (4) par câble ou sans fil, en particulier via un module GPRS/UMTS/LTE.

5. Dispositif d'affichage de vitesse selon l'une des revendications précédentes, **caractérisé en ce qu'**une communication bidirectionnelle avec le serveur est réalisée et **en ce que** les données stockées dans le dispositif de stockage peuvent être échangées avec le serveur (4) et/ou stockées et/ou traitées par le serveur (4) et/ou accessibles via l'Internet connecté au serveur (4).

6. Dispositif d'affichage de vitesse selon l'une des revendications précédentes, **caractérisé en ce que** l'indicateur de vitesse peut être commandé à distance et les paramètres de réglage de l'indicateur de vitesse (100) peuvent être attribués par le serveur (4) et/ou un changement de mode peut être généré par le serveur.

7. Dispositif d'affichage de vitesse selon l'une des revendications précédentes, **caractérisé en ce que** l'indicateur de vitesse (100) comporte un capteur de température qui détecte la température au niveau de l'indicateur de vitesse (100) et la mémorise dans le dispositif de mémorisation, où un mode d'avertissement de chaussée glissante peut être sélectionné par le dispositif de commande, en particulier lorsque la température détectée est inférieure à une température prédéterminée mémorisée dans le dispositif de mémorisation, et dans ce mode une indication d'avertissement de chaussée glissante peut être représentée sur le dispositif d'affichage (8).

8. Dispositif d'affichage de vitesse selon l'une des revendications précédentes, **caractérisé en ce que** le dispositif d'affichage de vitesse (100) comporte au moins une caméra, en particulier un module de caméra Raspberry Pi, qui génère des images sur l'environnement du dispositif d'affichage de vitesse (100), en particulier sur l'état de la circulation et/ou la météo au niveau du dispositif d'affichage de vitesse (100), où les images peuvent être stockées dans le dispositif de stockage.

9. Dispositif d'affichage de vitesse selon l'une des revendications précédentes, **caractérisé en ce que** l'indicateur de vitesse (100) comporte une unité de boussole permettant de déterminer la direction d'installation de l'indicateur de vitesse (100), où la direction d'installation peut être mémorisée dans le dispositif de mémoire.

10. Dispositif d'affichage de vitesse selon l'une des revendications précédentes, **caractérisé en ce que** l'indicateur de vitesse (100) comporte un capteur de luminosité qui permet de régler la luminosité des affichages sur le dispositif d'affichage (8).

11. Dispositif d'affichage de vitesse selon l'une des revendications précédentes, **caractérisé en ce que** l'indicateur de vitesse (100) comporte un mode smiley dans lequel au moins un caractère correspondant à un résultat de comparaison entre la vitesse détectée et une vitesse prédéterminée mémorisée dans le dispositif de mémorisation et attribuée en particulier comme l'un des paramètres par le serveur (4) est affiché sur le dispositif d'affichage (8), où la vitesse détectée est en particulier en outre affichée sur le dispositif d'affichage (8) .

12. Dispositif d'affichage de vitesse selon l'une des revendications précédentes, **caractérisé en ce que** l'indicateur de vitesse (100) présente un mode texte dans lequel des textes sont représentés sur le dispositif d'affichage (8) en fonction d'un résultat de comparaison entre la vitesse détectée et une vitesse prédéfinie mémorisée dans le dispositif de mémorisation et attribuée en particulier comme l'un des paramètres par le serveur (4), où la vitesse détectée est en particulier en outre représentée sur le dispositif d'affichage (8) et/ou l'indicateur de vitesse (100) présente un mode info dans lequel des textes prédéfinis sont représentés sur le dispositif d'affichage (8).

13. Dispositif d'affichage de vitesse selon l'une des revendications précédentes, **caractérisé en ce que** l'indicateur de vitesse (100) présente un mode de signalisation routière dans lequel des panneaux de signalisation routière prédéfinis sont représentés sur le dispositif d'affichage (8).
